# EUROPÄISCHE PATENTANMELDUNG

(11) **EP 3 670 595 A1**
(43) Veröffentlichungstag der Anmeldung: **24.06.2020**
(21) Anmeldenummer: 18213996.4
(22) Anmeldetag: 19.12.2018
(51) Int. Cl.: C08K 5/524, C08K 5/527, C08K 5/529, C08K 5/53

(54) **THERMOPLASTISCHE ZUSAMMENSETZUNGEN MIT GUTER THERMISCHER STABILITÄT**

(71) Anmelder: Covestro Deutschland AG, 51373 Leverkusen (DE)
(72) Erfinder: WANDNER, Derk, 51519 Odenthal (DE)
(74) Vertreter: Levpat

(57) **Zusammenfassung**

Die Erfindung betrifft eine Zusammensetzung zur Erzeugung einer thermoplastischen Formmasse, wobei die Zusammensetzung folgende Bestandteile enthält:
A) mindestens ein Polymer ausgewählt aus der Gruppe bestehend aus aromatischem Polycarbonat, aromatischem Polyestercarbonat und Polyester,
B) mindestens eine Verbindung gemäß der allgemeinen Formel (3) 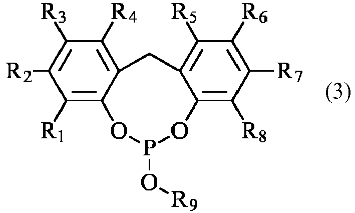 wobei R₁, R₂, R₃, R₄, R₅, R₆, R₇, R₈ und R₉ unabhängig voneinander jeweils für gegebenenfalls halogeniertes C₁- bis C₁₂-Alkyl, C₁- bis C₁₂- Alkoxy, gegebenenfalls durch Alkyl und/oder Halogen substituiertes C₅- bis C₆-Cycloalkyl, gegebenenfalls durch Alkyl und/oder Halogen und/oder Hydroxy-substituiertes C₆- bis C₂₀-Aryloxy, Halogen oder Wasserstoff
stehen,
sowie ein Verfahren zur Herstellung der Formmasse, die Formmasse selbst, die Verwendung der Zusammensetzung oder Formmasse zur Herstellung von Formkörpern und die Formkörper selbst.

## Beschreibung

Die vorliegende Erfindung betrifft thermoplastische Zusammensetzungen, zur Erzeugung von thermoplastischen Formmassen, ein Verfahren zur Herstellung von thermoplastischen Formmassen, die Formmassen selbst, die Verwendung der Zusammensetzungen oder Formmassen zur Herstellung von Formkörpern und die Formkörper selbst.

Insbesondere betrifft die Erfindung thermoplastische Polycarbonat-Zusammensetzungen.

Polycarbonat-Zusammensetzungen sind seit langem bekannt und aus diesen Materialien werden für eine Vielzahl von Anwendungen Formkörper hergestellt, beispielsweise im Automobilbereich, für Schienenfahrzeuge, für den Bausektor, für optische Datenträger, im Bereich Elektro/Elektronik und bei Haushaltsgeräten.

Polycarbonat als solches zeichnet sich durch ein gutes Eigenschaftsprofil mit hoher Schlagzähigkeit und Kerbschlagzähigkeit, Wärmeformbeständigkeit, Transparenz und Maßhaltigkeit aus.

Polycarbonat kann jedoch bei der Verarbeitung (in der Schmelze) aber auch bei Langzeitthermolagerung (Thermooxidation) einen Polymerabbau zeigen. Dieser Abbau bewirkt einerseits einen Viskositätsabbau des Polymers andererseits aber auch die Bildung chromophorer Substanzen, welche die optischen Eigenschaften des Materials negativ beeinflussen.

Zur Vermeidung dieser Abbaureaktionen werden dem Polycarbonat daher meist Thermostabilisatoren beigemischt. Häufig handelt es sich dabei um Phosphorverbindungen wie Phosphite. Zudem wird oft als zweiter Stabilisator ein sterisch gehindertes Phenol eingesetzt.

WO 2009/138175 A1 offenbart Copolycarbonate und Zusammensetzungen enthaltend Thermostabilisatoren sowie die Verwendung zur Herstellung von Formteilen. Dabei werden zahlreiche Stabilisatoren genannt.

WO 2013/079599 A1 offenbart thermoplastische Formmassen aus Polycarbonat und anorganischem Füllstoff mit guten mechanischen Eigenschaften und guter Oberfläche. Es werden spezielle Stabilisatoren auf Phosphorbasis für die Formmassen offenbart.

WO 2013/144102 A1 offenbart eine Polycarbonat- und Copolycarbonat-Zusammensetzung mit verbesserten optische Eigenschaften der daraus hergestellten Formkörper. Die Zusammensetzungen enthalten mindestens ein Additiv aus der Gruppe der Thermostabilisatoren auf Phosphorbasis. US 9688843 B2 offenbart Polycarbonat-Zusammensetzungen, die durch die Kombination eines Phosphites mit einem sterisch gehinderten Phenol stabilisiert worden und sich durch gute optische Eigenschaften hinsichtlich Gelbwert und Trübung auszeichnen.

EP3174928 A1 offenbart Polycarbonat-Zusammensetzungen enthaltend ein sterisch gehindertes Phenol und einen Phosphitstabilisator, die sich durch einen geringen Gelbwert und einen definierten Bereich an Umlagerungsstrukturen auszeichnen.

EP3049472 A1 beschreibt Polycarbonat-Zusammensetzungen mit einem speziellem Phosphit, die einen geringen Gelbwert aufweisen und weiterhin ein sterisch gehindertes Phenol enthalten können.

US 9234096 B2 offenbart Polycarbonat-Zusammensetzungen enthaltend eine Mischung aus zwei speziellen Phosphitstabilisatoren und einem sterisch gehinderten Phenol. Es wird eine gute Farbstabilität beschrieben.

EP 2970648 B1, EP3044265A2, US8669314 B2, DE 1019707 B4 und EP 1080146 A offenbaren verschiedene Polycarbonat-Zusammensetzung, denen jeweils eine Stabilisatormischung enthaltend ein Phosphit, ein sterisch gehindertes Phenol und einen Thioether hinzugefügt wird.

Trotz der zahlreichen Offenbarungen zur Stabilisierung von Polycarbonat-Zusammensetzungen bestand ein Bedarf nach weiteren Verbesserungen hinsichtlich der mechanischen und optischen Eigenschaften von aus Polycarbonat-Zusammensetzungen hergestellten Formkörpern.

Es war daher wünschenswert, eine Polycarbonat-Zusammensetzung mit verbesserter Kerbschlagzähigkeit, gesteigerter Transparenz und verringerter Trübung sowie geringem Gelbwert zur Verfügung zu stellen, wobei die optischen Werte auch nach thermischer Alterung in gegenüber dem Stand der Technik verbessertem Maße erhalten bleiben.

Es wurde nun überraschenderweise gefunden, dass eine Zusammensetzung zur Erzeugung einer thermoplastischen Formmasse, wobei die Zusammensetzung folgende Bestandteile enthält:
A) mindestens ein Polymer ausgewählt aus der Gruppe bestehend aus aromatischem Polycarbonat, aromatischem Polyestercarbonat und Polyester,
B) mindestens eine Verbindung gemäß der allgemeinen Formel (3) 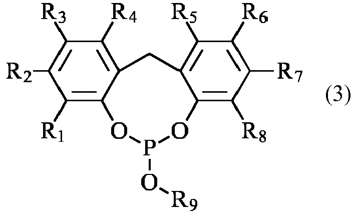
wobei R₁, R₂, R₃, R₄, R₅, R₆, R₇, R₈ und R₉ unabhängig voneinander jeweils für gegebenenfalls halogeniertes C₁- bis C₁₂-Alkyl, C₁- bis C₁₂- Alkoxy, gegebenenfalls durch Alkyl und/oder Halogen substituiertes C₅- bis C₆-Cycloalkyl, gegebenenfalls durch Alkyl und/oder Halogen und/oder Hydroxy-substituiertes C₆- bis C₂₀-Aryloxy, Halogen oder Wasserstoff stehen,
die vorteilhaften Eigenschaften zeigt.

In einer bevorzugten Ausführungsform enthält die Zusammensetzung weiterhin als Komponente C ein sterisch gehindertes Phenol. Die Zusammensetzung enthält bevorzugt
80 bis 99,9 Gew.-%, weiter bevorzugt 90 bis 99,4 Gew.-%, besonders bevorzugt 95 bis 98,8 Gew.-% der Komponente A,
0,005 bis 1 Gew.-%, weiter bevorzugt 0,01 bis 0,5 Gew.-%, besonders bevorzugt 0,03 bis 0,15 Gew.-% der Komponente B,
0 bis 1 Gew.-%, weiter bevorzugt 0 bis 0,5 Gew.-%, besonders bevorzugt 0,01 bis 0,05 Gew.-% der Komponente C,
0 bis 18 Gew.-%, weiter bevorzugt 0,1 bis 9 Gew.-%, besonders bevorzugt 0,2 bis 4 Gew.-% weitere polymere Bestandteile und/oder Polymeradditive verschieden von den Komponenten B und C als Komponente D.

Weiter bevorzugt werden die Komponenten B und C im einem Gewichtsverhältnis B:C von 1:2 bis 6:1 eingesetzt, ganz besonders bevorzugt in einem Gewichtsverhältnis von 2:1 bis 5:1.

In einer bevorzugten Ausführungsform besteht die Zusammensetzung zu mindestens 90 Gew.-%, weiter bevorzugt zu mindestens 95 Gew.-%, aus den Komponenten A bis D. Am meisten bevorzugt besteht die Zusammensetzungen nur aus den Komponenten A bis D.

### Komponente A

Polycarbonate im Sinne der vorliegenden Erfindung sind sowohl Homopolycarbonate als auch Copolycarbonate und/oder Polyestercarbonate; die Polycarbonate können in bekannter Weise linear oder verzweigt sein. Erfindungsgemäß können auch Mischungen von Polycarbonaten verwendet werden.

Die thermoplastischen Polycarbonate einschließlich der thermoplastischen, aromatischen Polyestercarbonate haben gewichtsgemittelte Molekulargewichte M_{w} bestimmt durch GPC (Gelpermeationschromatographie in Methylenchlorid mit Polycarbonat als Standard) von 15000 g/mol bis 50000 g/mol, bevorzugt von 20000 g/mol bis 35000 g/mol und weiter bevorzugt von 22000 g/mol bis 33000 g/mol.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (1)

HO-Z-OH (1),

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2) 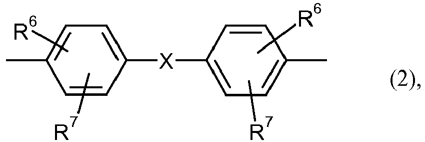 in der
- R⁶ und R⁷: unabhängig voneinander für H, C₁- bis C₁₈-Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C₂- bis C₅-Alkyliden, C₅- bis C₆-Cycloalkyliden, -O-, -SO-, -CO-, -S-, -SO₂-
oder für einen Rest der Formel (2a)

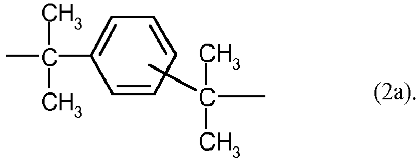

Beispiele für Dihydroxyarylverbindungen (Diphenole) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan (Bisphenol A), 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).
Insbesondere bevorzugt ist 2,2-Bis-(4-hydroxyphenyl)-propan (Bisphenol-A).

Diese und weitere geeignete Diphenole sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff.", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die zur Regelung des Molekulargewichtes benötigten monofunktionellen Kettenabbrecher, wie Phenole oder Alkylphenole, insbesondere Phenol, p-tert. Butylphenol, iso-Octylphenol, Cumylphenol, deren Chlorkohlensäureester oder Säurechloride von Monocarbonsäuren bzw. Gemische aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind, bzw. im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel zudosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl] -propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrigen alkalischen Phase vorgelegt werden oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

In bevorzugter Ausführungsform wird als Komponente A nur aromatisches Polycarbonat eingesetzt, am meisten bevorzugt ein aromatisches Polycarbonat mit Bisphenol A als Diphenol-Einheit.

### Komponente B

Als Komponente B wird mindestens eine Verbindung gemäß der allgemeinen Formel (3) eingesetzt: 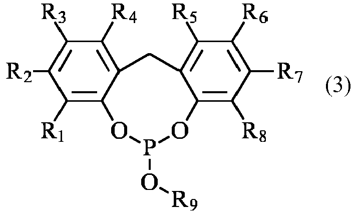 wobei R₁, R₂, R₃, R₄, R₅, R₆, R₇, R₈ und R₉ unabhängig voneinander jeweils für gegebenenfalls halogeniertes C₁- bis C₁₂-Alkyl, C₁- bis C₁₂- Alkoxy, gegebenenfalls durch Alkyl und/oder Halogen substituiertes C₅- bis C₆-Cycloalkyl, gegebenenfalls durch Alkyl und/oder Halogen und/oder Hydroxy-substituiertes C₆- bis C₂₀-Aryloxy, Halogen oder Wasserstoff stehen.

Bevorzugt stehen dabei R₁, R₂, R₃, R₄, R₅, R₆, R₇, R₈ und R₉ unabhängig voneinander jeweils für gegebenenfalls halogeniertes C₁- bis C₁₂-Alkyl, Halogen oder Wasserstoff.

Weiter bevorzugt stehen dabei R₂, R₄, R₅ und R₇ jeweils für Wasserstoff und R₁, R₃, R₆, R₈ und R₉ unabhängig voneinander jeweils für C₁- bis C₁₂-Alkyl.

Am meisten bevorzugt wird als Komponente B die Verbindung gemäß Struktur (3a) eingesetzt.

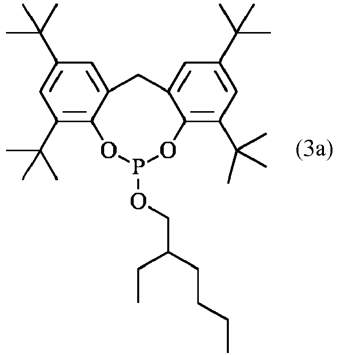

Diese Verbindung ist als CAS: 126050-54-2 klassifiziert und kommerziell unter dem Namen ADK Stab™ HP-10 der Firma Adeka (Japan) verfügbar.

### Komponente C

Die Zusammensetzung kann als Komponente C ein sterisch gehindertes Phenol enthalten. Auch Mischungen mehrerer solcher Komponenten können eingesetzt werden
Bevorzugt handelt es sich dabei um eine Verbindung der allgemeinen Struktur (4). 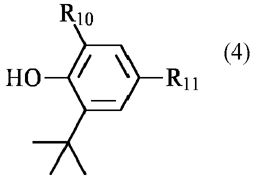 wobei R₁₀ für C₁- bis C₈-Alkyl und R₁₁ für einen organischen Rest mit C₄- bis C₆₀- steht.

Bevorzugt ist die Komponente C ausgewählt aus mindestens einer Verbindung gemäß den Strukturen (5), (6) und (7).

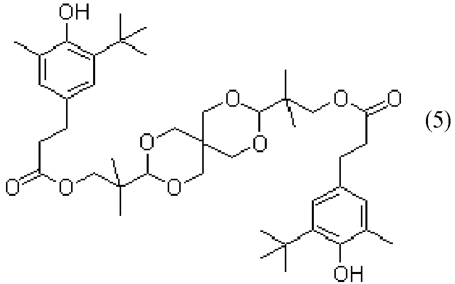

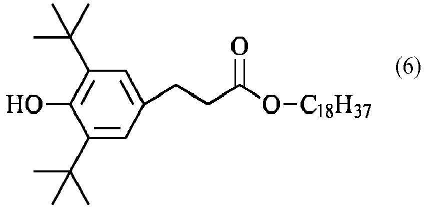

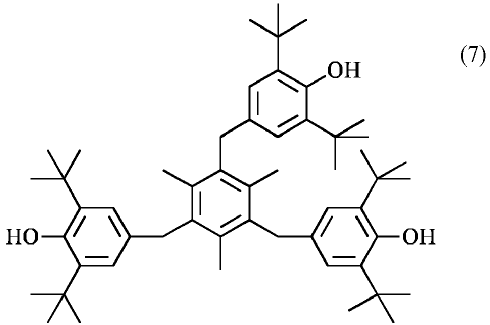

Die Verbindung 5 ist als CAS: 90498-90-1 klassifiziert und kommerziell unter dem Namen ADK Stab™ AO-80 der Firma Adeka (Japan) verfügbar.

Die Verbindung 6 (Octadecyl-3-(3,5-di-tert butyl-4-hydroxyphenyl)propionat) ist als CAS: 2082-79-3 klassifiziert und kommerziell unter dem Namen Irganox™ 1076 der Firma BASF verfügbar.

Die Verbindung 7 ist als CAS: 1709-70-2 klassifiziert und kommerziell unter dem Namen Songnox™ 1330 der Firma Songwon Industrial Group verfügbar.

Am meisten bevorzugt wird als Komponente C die Verbindung gemäß Struktur (5) eingesetzt. Durch diese Komponente C wird in Verbindung mit Komponente B ein besonders gutes Eigenschaftsprofil mit geringer Vergilbung nach Lagerung bei erhöhter Temperatur ermöglicht.

### Komponente D

Die Zusammensetzung kann als Komponente D ein oder mehrere weitere Additive oder Polymere enthalten, bevorzugt ausgewählt aus der Gruppe bestehend aus Flammschutzmitteln (z.B. organische Phosphor- oder Halogenverbindungen, insbesondere Bisphenol-A basierendes Oligophosphat), Antidrippingmitteln (beispielsweise Verbindungen der Substanzklassen der fluorierten Polyolefine, der Silikone sowie Aramidfasern), Flammschutzsynergisten (beispielsweise nanoskalige Metalloxide), Rauchinhibitoren (beispielsweise Zinkborat), Gleit- und Entformungsmitteln (beispielsweise Pentaerythrittetrastearat), Nukleiermitteln, Antistatika, Leitfähigkeitsadditiven, Fließfähigkeitspromotoren, Verträglichkeitsvermittlern, weiteren polymeren Bestandteilen (beispielsweise Polyestern oder Vinyl(co)polymeren oder funktionellen Blendpartnern), Füll- und Verstärkungsstoffen (beispielsweise Karbonfasern, Talk, Glimmer, Kaolin, CaCO₃) sowie Farbstoffen und Pigmenten (beispielsweise Titandioxid oder Eisenoxid).

In bevorzugter Ausführungsform ist die Zusammensetzung frei von Flammschutzmitteln, Antidrippingmitteln, Flammschutzsynergisten und Rauchinhibitoren.

In ebenfalls bevorzugter Ausführungsform ist die Zusammensetzung frei von Füll- und Verstärkungsstoffen.

In besonders bevorzugter Ausführungsform ist die Zusammensetzung frei von Flammschutzmitteln, Antidrippingmitteln, Flammschutzsynergisten, Rauchinhibitoren sowie Füll- und Verstärkungsstoffen.

In besonders bevorzugter Ausführungsform ist die Zusammensetzung frei von Flammschutzmitteln, Antidrippingmitteln, Flammschutzsynergisten, Rauchinhibitoren sowie Füll- und Verstärkungsstoffen.

In bevorzugter Ausführungsform enthält die Zusammensetzung mindestens ein Polymeradditiv ausgewählt aus der Gruppe bestehend aus Gleit- und Entformungsmitteln, Fließfähigkeitspromotoren, Verträglichkeitsvermittlern, weiteren polymeren Bestandteilen, Farbstoffen und Pigmenten.

In besonders bevorzugter Ausführungsform enthält die Zusammensetzung mindestens ein Polymeradditiv ausgewählt aus der Gruppe bestehend aus Gleit- und Entformungsmitteln, Fließfähigkeitspromotoren, Verträglichkeitsvermittlern, weiteren polymeren Bestandteilen, Farbstoffen und Pigmenten und ist frei von weiteren Polymeradditiven.

In bevorzugter Ausführungsform enthält die Zusammensetzung als Entformungsmittel Pentaerythrittetrastearat.

### Herstellung der Formmassen und Formkörper

Aus den erfindungsgemäßen Zusammensetzungen können thermoplastische Formmassen hergestellt werden.

Die erfindungsgemäßen thermoplastischen Formmassen können beispielsweise hergestellt werden, indem man die jeweiligen Bestandteile in bekannter Weise vermischt und bei Temperaturen von bevorzugt 200°C bis 340°C, besonders bevorzugt bei 240 bis 320°C und ganz besonders bevorzugt 240°C bis 300°C in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet.

Dabei wird zumindest die Komponente A aufgeschmolzen, alle Bestandteile der Zusammensetzung ineinander dispergiert und/oder gelöst und in einem weiteren Schritt die erhaltene Schmelze durch Abkühlen wieder verfestigt und optional granuliert. Es ist möglich, die Schritte der Verfestigung und Granulierung in beliebiger Reihenfolge zueinander durchzuführen.

Unter Formmasse wird also das Produkt verstanden, das erhaltend wird, wenn die Bestandteile der Zusammensetzung schmelzcompoundiert und schmelzextrudiert werden.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Gegenstand der Erfindung ist auch ein Verfahren zur Herstellung der erfindungsgemäßen Formmassen.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte, sowie transparente Bauteile im allgemeinen, welche hohe Anforderungen an Farbstabilität und möglichst hohen Transmissionswerten haben.

Nachfolgend werden weitere Ausführungsformen 1 bis 25 der vorliegenden Erfindung beschrieben:
1. Zusammensetzung zur Erzeugung einer thermoplastischen Formmasse, wobei die Zusammensetzung folgende Bestandteile enthält
   A) mindestens ein Polymer ausgewählt aus der Gruppe bestehend aus aromatischem Polycarbonat, aromatischem Polyestercarbonat und Polyester,
   B) mindestens eine Verbindung gemäß der allgemeinen Formel (3) 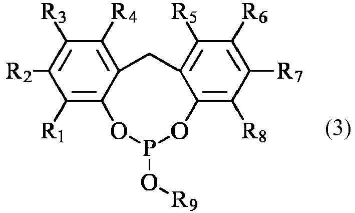
   wobei R₁, R₂, R₃, R₄, R₅, R₆, R₇, R₈ und R₉ unabhängig voneinander jeweils für gegebenenfalls halogeniertes C₁- bis C₁₂-Alkyl, C₁- bis C₁₂- Alkoxy, gegebenenfalls durch Alkyl und/oder Halogen substituiertes C₅- bis C₆-Cycloalkyl, gegebenenfalls durch Alkyl und/oder Halogen und/oder Hydroxy-substituiertes C₆- bis C₂₀-Aryloxy, Halogen oder Wasserstoff stehen.
2. Zusammensetzung gemäß Ausführungsform 1, wobei als Komponente A ein aromatisches Polycarbonat auf Basis von Bisphenol A eingesetzt wird.
3. Zusammensetzung gemäß Ausführungsform 1 oder 2, dadurch gekennzeichnet, dass R₁, R₂, R₃, R₄, R₅, R₆, R₇, R₈ und R₉ unabhängig voneinander jeweils für gegebenenfalls halogeniertes C₁- bis C₁₂-Alkyl, Halogen oder Wasserstoff stehen.
4. Zusammensetzung gemäß einer der vorherigen Ausführungsformen, dadurch gekennzeichnet, dass R₂, R₄, R₅ und R₇ jeweils für Wasserstoff stehen und R₁, R₃, R₆, R₈ und R₉ unabhängig voneinander jeweils für C₁- bis C₁₂-Alkyl stehen.
5. Zusammensetzung gemäß einer der vorherigen Ausführungsformen, dadurch gekennzeichnet, dass Komponente B die Verbindung gemäß Formel (3a) ist 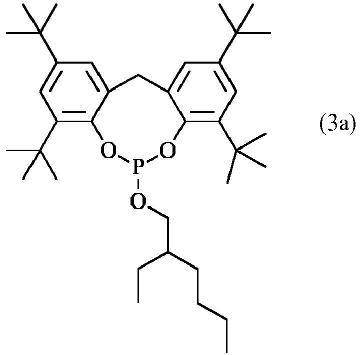
6. Zusammensetzung gemäß einer der vorherigen Ausführungsformen weiterhin enthaltend als Komponente C ein sterisch gehindertes Phenol.
7. Zusammensetzung gemäß Ausführungsform 6, wobei die Komponente C eine Verbindung der allgemeinen Struktur (4) ist 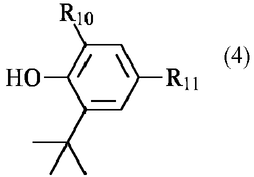 wobei R₁₀ für C₁- bis C₈-Alkyl und R₁₁ für einen organischen Rest mit C₄- bis C₆₀- steht.
8. Zusammensetzung gemäß einer der Ausführungsformen 6 oder 7, wobei die Komponente C ausgewählt ist aus der Gruppe bestehend aus Verbindungen gemäß den Strukturen (5), (6) und (7). 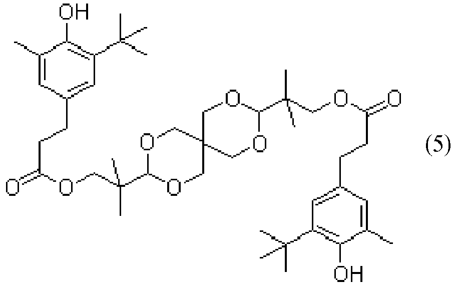 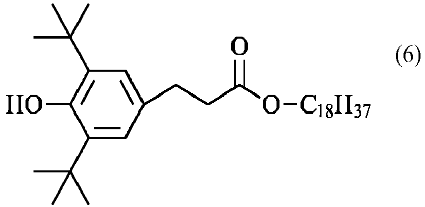 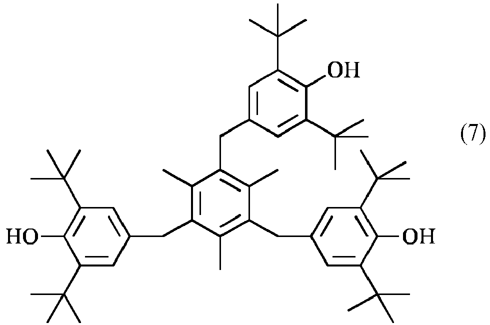
9. Zusammensetzung gemäß Ausführungsform 8, wobei als Komponente C die Verbindung gemäß Struktur (5) eingesetzt wird.
10. Zusammensetzung gemäß einer der vorherigen Ausführungsformen weiterhin enthaltend als Komponente D mindestens ein Additiv oder Polymer ausgewählt aus der Gruppe bestehend aus Flammschutzmitteln, Antidrippingmitteln, Flammschutzsynergisten, Rauchinhibitoren, Gleit- und Entformungsmitteln, Nukleiermitteln, Antistatika, Leitfähigkeitsadditiven, Fließfähigkeitspromotoren, Verträglichkeitsvermittlern, weiteren polymeren Bestandteilen, Füll- und Verstärkungsstoffen, sowie Farbstoffen und Pigmenten.
11. Zusammensetzung gemäß einer der vorherigen Ausführungsformen, dadurch gekennzeichnet, dass die Komponente B in einer Menge von 0,005 bis 1 Gew.-% eingesetzt wird.
12. Zusammensetzung gemäß einer der vorherigen Ausführungsformen, dadurch gekennzeichnet, dass die Komponente B in einer Menge von 0,01 bis 0,5 Gew.-% eingesetzt wird.
13. Zusammensetzung gemäß einer der vorherigen Ausführungsformen, dadurch gekennzeichnet, dass die Komponente B in einer Menge von 0,03 bis 0,15 Gew.-% eingesetzt wird.
14. Zusammensetzung gemäß einer der vorherigen Ausführungsformen 1-11 enthaltend
   80 bis 99,9 Gew.-% der Komponente A,
   0,005 bis 1 Gew.-% der Komponente B,
   0 bis 1 Gew.-% der Komponente C und
   0 bis 18 Gew.-% der Komponente D.
15. Zusammensetzung gemäß einer der vorherigen Ausführungsformen 1-12 enthaltend
   90 bis 99,4 Gew.-% der Komponente A,
   0,01 bis 0,5 Gew.-% der Komponente B,
   0 bis 0,5 Gew.-% der Komponente C und
   0,1 bis 9 Gew.-% der Komponente D.
16. Zusammensetzung gemäß einer der vorherigen Ausführungsformen enthaltend
   95 bis 98,8 Gew.-% der Komponente A,
   0,03 bis 0,15 Gew.-% der Komponente B,
   0,01 bis 0,05 Gew.-% der Komponente C und
   0,2 bis 4 Gew.-% der Komponente D.
17. Zusammensetzung gemäß einer der Ausführungsformen 6 bis 16, dadurch gekennzeichnet, dass die Komponenten B und C in einem Gewichtsverhältnis von 1:2 bis 6:1 eingesetzt werden.
18. Zusammensetzung gemäß einer der Ausführungsformen 6 bis 17, dadurch gekennzeichnet, dass die Komponenten B und C in einem Gewichtsverhältnis von 2:1 bis 5:1 eingesetzt werden.
19. Zusammensetzung gemäß einer der vorherigen Ausführungsformen, bestehend zu mindestens 90 Gew.-% aus den Komponenten A, B sowie optional C und D.
20. Zusammensetzung gemäß einer der vorherigen Ausführungsformen, bestehend zu mindestens 95 Gew.-% aus den Komponenten A, B sowie optional C und D.
21. Zusammensetzung gemäß einer der vorherigen Ausführungsformen, bestehend aus den Komponenten A, B sowie optional C und D.
22. Verfahren zur Herstellung von Formmassen, enthaltend die Schritte (i), (ii) und optional (iii), wobei in einem ersten Schritt (i)
   eine Zusammensetzung gemäß einer der Ausführungsformen 1 bis 21 durch Zuführung thermischer und/oder mechanischer Energie aufgeheizt, mindestens die Komponente A) dadurch aufgeschmolzen und alle eingesetzten Komponenten ineinander dispergiert und /oder gelöst werden,
   und
   in einem weiteren Schritt (ii)
   die aus Verfahrensschritt (i) resultierende Schmelze (ii) durch Abkühlen wieder verfestigt und (iii) optional granuliert wird,
   wobei die Verfahrensschritte (ii) und (iii) in beliebiger Reihenfolge zueinander durchgeführt werden können.
23. Formmasse, erhalten oder erhältlich nach einem Verfahren nach Ausführungsform 22.
24. Verwendung einer Zusammensetzung gemäß einer der Ausführungsformen 1 bis 21 oder einer Formmasse gemäß Ausführungsform 23 zur Herstellung von Formkörpern.
25. Formkörper enthaltend eine Zusammensetzung gemäß einer der Ausführungsformen 1 bis 21 oder eine Formmasse gemäß Ausführungsform 23.

### Beispiele

### Eingesetzte Komponenten

### Komponente A:

A: Lineares Polycarbonat auf Basis Bisphenol-A mit einem gewichtsgemittelten Molekulargewicht Mw von 24000 g/mol bestimmt durch Gelpermeationschromatographie in Methylenchlorid mit Polycarbonat als Standard.

**Komponente B-1:** Verbindung gemäß Struktur 3a, ADK Stab™ HP-10 der Firma Adeka (Japan).

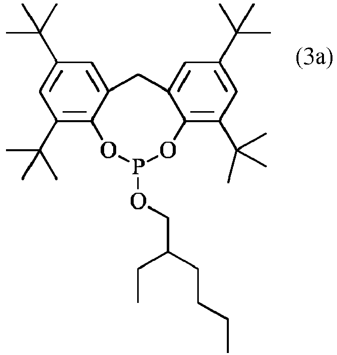

### Komponente B-2:

Bis(2,6-di-tert-butyl-4-methylphenyl)-pentaerythritoldiphosphit (ADK STAB™ PEP-36, Adeka, Japan)

### Komponente B-3:

Tris-(2,4-di-tert-butylphenyl)phosphit (Irgafos™ 168, BASF, Deutschland)

### Komponente C-1:

Verbindung gemäß Struktur 5, ADK Stab™ AO-80 der Firma Adeka (Japan);

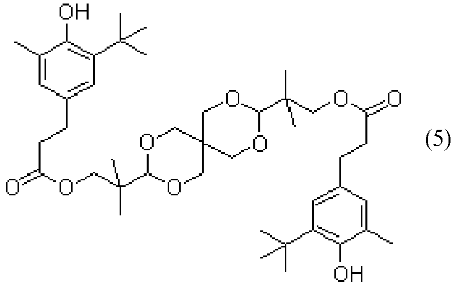

### Komponente C-2:

Octadecyl-3-(3,5-di-tert butyl-4-hydroxyphenyl)propionat (Irganox™ 1076, BASF, Deutschland).

### Komponente C-3:

Verbindung gemäß Struktur 7, Songnox™ 1330 der Firma Songwon Industrial Group, Südkorea

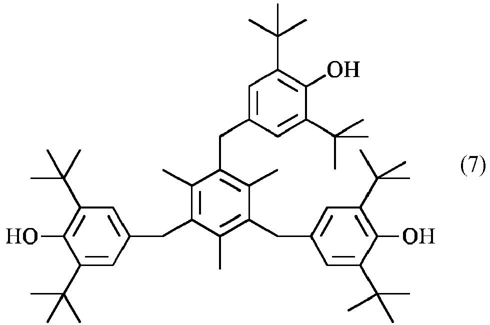

### Herstellung und Prüfung der erfindungsgemäßen Formmassen

Das Mischen der Komponenten erfolgte auf einer modifizierten Spritzgussmaschine der Firma Arburg. Die Modifizierung umfasst ein Konzept zur quantitativen Dosierung von verschiedenen Polymeren und / oder Additiven in eine Mischkammer und einem nachgeschalteten statischen Mischer, bevor die Schmelze in ein Standardspitzgusswerkzeug eingespritzt wird. Die Patentschrift DE 101 41 459 C 2 beschreibt genanntes Verfahren im Detail.

Verwendete Massetemperaturen lagen im Bereich zwischen 300 und 320°C und einer Werkzeugtemperatur von 80°C.

Weitere Versuche wurden auf einem DSM Miniextruder MIDI 2000 bei einer Prozesstemperatur von 290°C durchgeführt. Die Prüfkörper der Dimension 6 x 3 x 1,5 cm wurden mit einer aufgesetzten, pneumatisch betrieben Spritzgusseinheit mit einem Spritzgussvolumen von 3,5 cm³ und einem Schussgewicht von 3,6 g gefertigt.

Die Kerbschlagzähigkeit nach Charpy wurde bei 23°C gemäß ISO 179/1eA (Version von 2010) jeweils zehn Prüfkörpern der Abmessung 80 mm x 10 mm x 4mm bestimmt. Als zähes Bruchverhalten wurden Kerbschlagzähigkeitseinzelwerte ≥30 kJ/m² gewertet. Es wird jeweils der Mittelwert aus den Einzelwerten ≥ 30 kJ/m² und < 30 kJ/m² angegeben.

Die Transmission wurde bestimmt mit einem HunterLab UltraScan PRO gemäß CIE No. 15:2004 Der Gelbwert (YI) wurde bestimmt mit einem HunterLab UltraScan PRO gemäß der Norm ASTM E313:2015.

Die Trübung (Haze) wurde bestimmt mit einem HunterLab UltraScan PRO ASTM D1003:2013 Die Bestimmung von Transmission, Gelbwert und Trübung fand sowohl nach dem Spritzguss statt als auch an Probekörpern, die bei einer Temperatur von 135 °C für verschiedene Zeitdauern (250, 500 und 750 Stunden) in Umluftofen der Firma Heraeus Model UT 6060.

**Tabelle 1: Verarbeitung Direktdosierun Spritzguss.**

| Komponente (Gew.Teile) | 1 | 2 | 3 | V4 | V5 | V6 | V7 | V8 | V9 |
|---|---|---|---|---|---|---|---|---|---|
| A1 | 99,9 | 99,9 | 99,9 | 99,9 | 99,9 | 99,9 | 99,9 | 99,9 | 99,9 |
| B-1 | 0,08 | 0,08 | 0,08 | | | | | | |
| B-2 | | | | 0,08 | 0,08 | 0,08 | | | |
| B-3 | | | | | | | 0,08 | 0,08 | 0,08 |
| C-1 | 0,02 | 0,02 | 0,02 | 0,02 | 0,02 | 0,02 | | | |
| C-2 | | | | | | | 0,02 | 0,02 | 0,02 |

| Pozesstemperatur (°C) | 300 | 320 | 320 | 300 | 320 | 320 | 300 | 320 | 320 |
|---|---|---|---|---|---|---|---|---|---|
| Verweilzeit | einfach | einfach | dreifach | einfach | einfach | dreifach | einfach | einfach | dreifach |
| Charpy Kerbschlag (ISO 179/ 1eA) kJ/m² | | | | | | | | | |
| Anzahl zäh/spröd | 7/3 | 5/5 | 5/5 | 6/4 | 0/10 | 0/10 | 3/7 | 1/9 | 0/10 |
| Mittelwert zäh/spröd (kJ/m²) | 63/13 | 61/17 | 61/15 | 60/15 | 0/14 | 0/14 | 65/18 | 59/15 | 0/14 |
| Transmission (%) | 89,8 | 89,8 | 89,8 | 89,1 | 89,1 | 89,1 | 88,9 | 88,9 | 89,1 |
| YI | 1,0 | 1,1 | 1,1 | 1,3 | 1,4 | 1,4 | 2,1 | 1,7 | 1,8 |
| Haze | 0,7 | 0,9 | 0,7 | 1,9 | 2,2 | 2,4 | 2,4 | 2,3 | 2,1 |
| Transmission (%, 135°C, 250 h) | 89,6 | 89,4 | 89,3 | 88,3 | 87,7 | 87,5 | 88,8 | 88,5 | 87,8 |
| YI (135°C, 250h) | 1,9 | 2,6 | 3,6 | 5,2 | 6,1 | 7,0 | 2,7 | 3,1 | 4,2 |

**Tabelle 2: Verarbeitung Direktdosierung Spritzguss.**

| Komponente (Gew.Teile) | 10 | 11 | 12 | V13 | V14 | V15 |
|---|---|---|---|---|---|---|
| A1 | 99,6 | 99,6 | 99,6 | 99,9 | 99,9 | 99,9 |
| B-1 | 0,32 | 0,32 | 0,32 | | | |
| B-2 | | | | 0,32 | 0,32 | 0,32 |
| B-3 | | | | | | |
| C-1 | 0,08 | 0,08 | 0,08 | 0,08 | 0,08 | 0,08 |

| Prozesstemperatur (°C) | 300 | 320 | 320 | 300 | 320 | 320 |
|---|---|---|---|---|---|---|
| Verweilzeit | einfach | einfach | dreifach | einfach | einfach | dreifach |
| Charpy Kerbschlag (ISO 179/ 1eA) kJ/m² | | | | | | |
| Anzahl zäh/spröd | 3/7 | 0/10 | 0/9 | 0/10 | 0/10 | 0/9 |
| Mittelwert zäh/spröd (kJ/m²) | 65/17 | 0/15 | 0/15 | 0/13 | 0/15 | 0/14 |
| Transmission (%) | 89,7 | 89,8 | 89,7 | 87,2 | 87,1 | 88,0 |
| YI | 1,3 | 1,1 | 1,2 | 2,6 | 3,1 | 2,6 |
| Haze | 1,0 | 1,3 | 1,1 | 1,9 | 2,0 | 1,7 |
| Transmission (%, 135°C, 250 h) | 87,6 | 84,5 | 86,2 | 80,3 | 75,8 | 76,7 |
| YI (135°C, 250h) | 7,1 | 12,2 | 10,1 | 13,3 | 16,0 | 15,9 |

**Tabelle 3: Verarbeitung DSM Miniextruder MIDI 2000.**

| Komponente (Gew.Teile) | 16 | 17 | 18 | V19 | V20 |
|---|---|---|---|---|---|
| A | 99,9 | 99,6 | 99,9 | 99,9 | 99,9 |
| B-1 | 0,08 | 0,24 | 0,08 | | |
| B-3 | | | | 0,08 | 0,24 |
| C-1 | 0,02 | 0,06 | | | |
| C-2 | | | | 0,02 | 0,06 |
| C-3 | | | 0,02 | | |

| Prozesstemperatur (°C) | 290 | 290 | 290 | 290 | 290 |
|---|---|---|---|---|---|
| Verweilzeit | 3 Min. | 3 Min. | 3 Min. | 3 Min. | 3 Min. |
| Transmission (%) | 89,4 | 89,6 | 89,7 | 88,6 | 89,5 |
| YI | 1,5 | 1,2 | 1,3 | 2,5 | 1,3 |
| Haze | 0,9 | 1,0 | 0,9 | 1,9 | 1,1 |
| Transmission (135°C, 500h) | 89,1 | 88,7 | 89,1 | 88,5 | 87,8 |
| YI (135°C, 500h) | 2,6 | 4,2 | 5,1 | 3,7 | 3,7 |
| Transmission (135°C, 750h) | 88,8 | 87,3 | 88,5 | 88,3 | 75,4 |
| YI (135°C, 750h) | 4,0 | 8,7 | 7,7 | 4,5 | 14,8 |

Die Beispiele in Tabelle 1 zeigen, dass beim Einsatz der erfindungsgemäßen Komponente B-1 eine deutlich verbesserte Kerbschlagzähigkeit, eine höhere Transmission sowie geringere Trübung und ein niedrigerer Gelbwert gegenüber entsprechenden Zusammensetzungen mit der nicht erfindungsgemäßen Phosphorverbindung B-2 (Vergleichsbeispiele V4-V6) erreicht wird. Diese Vorteile werden besonders deutlich, wenn die Zusammensetzung im Spritzgussverfahren einer besonders hohen thermischen Belastung durch erhöhte Verarbeitungstemperatur oder verlängerte Verweilzeit ausgesetzt wurde. Die genannten Vorteile hinsichtlich Transmission und Gelbwert verstärken sich ebenfalls noch, wenn den Spritzgusskörper über einen längeren Zeitraum bei 135°C gelagert wird.

Aus Tabelle 1 ergibt sich auch, dass die erfindungsgemäße Komponente B-1 zusammen mit der Komponente C-1 ein auch gegenüber einer häufig im Stand der Technik eingesetzten Kombination der Komponenten B-3 und C-2 (V7-V9) vorteilhaftes Eigenschaftsprofil hinsichtlich Kerbschlagzähigkeit, Gelbwert, Trübung und Beständigkeit gegenüber längerer Thermolagerung zeigt.

Aus Tabelle 2 ist ersichtlich, dass die erfindungsgemäße Komponente B-1 auch bei höherer Einsatzmenge vorteilhaft gegenüber der nicht erfindungsgemäßen Komponente B-2 ist. Insgesamt ist die in Tabelle 1 gewählte Konzentration der Komponenten B und C aber noch besser geeignet zur Erzielung der gewünschten Eigenschaften.

In Tabelle 3 sind Ergebnisse einer Herstellung über einen Miniextruder mit anschließender Spritzgussverarbeitung zusammengefasst. Aus den Daten ist ersichtlich, dass auch in diesem Fall mit der Komponente B-1 in Kombination mit C-1 ein besseres Verhalten hinsichtlich Transmission, Gelbwert und Trübung erreicht wird - besonders bei langer Thermolagerung bei 135°C - als mit der aus dem Stand der Technik bekannten Kombination von B-2 mit C-2 (V19-V20). Weiterhin zeigt sich, dass B-1 besonders in Verbindung mit dem sterisch gehinderten Phenol C-1 bei langer Thermolagerung vorteilhafte Ergebnisse erreicht werden, wie der Vergleich zwischen Versuch 16 und Versuch 18 verdeutlicht.

Aus einem Vergleich der Tabellen 1, 2 und 3 ergibt sich, dass bei den hier untersuchten Zusammensetzungen ein besonders gutes Eigenschaftsprofil aus hoher Transparenz und geringer Vergilbung, auch nach Wärmealterung, dann erreicht wird, wenn die Einsatzkonzentration der Komponenten B eine Obergrenze von 0,15 Gew.-% nicht überschreitet.

## Patentansprüche

1. Zusammensetzung zur Erzeugung einer thermoplastischen Formmasse, wobei die Zusammensetzung folgende Bestandteile enthält
A) mindestens ein Polymer ausgewählt aus der Gruppe bestehend aus aromatischem Polycarbonat, aromatischem Polyestercarbonat und Polyester,
B) mindestens eine Verbindung gemäß der allgemeinen Formel (3) 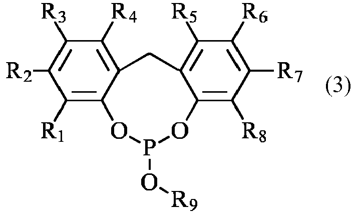 wobei R₁, R₂, R₃, R₄, R₅, R₆, R₇, R₈ und R₉ unabhängig voneinander jeweils für gegebenenfalls halogeniertes C₁- bis C₁₂-Alkyl, C₁- bis C₁₂- Alkoxy, gegebenenfalls durch Alkyl und/oder Halogen substituiertes C₅- bis C₆-Cycloalkyl, gegebenenfalls durch Alkyl und/oder Halogen und/oder Hydroxy-substituiertes C₆- bis C₂₀-Aryloxy, Halogen oder Wasserstoff
stehen.

2. Zusammensetzung gemäß Anspruch 1, **dadurch gekennzeichnet, dass** R₁, R₂, R₃, R₄, R₅, R₆, R₇, R₈ und R₉ unabhängig voneinander jeweils für gegebenenfalls halogeniertes C₁- bis C₁₂-Alkyl, Halogen oder Wasserstoff stehen.

3. Zusammensetzung gemäß einem der vorhergehenden Ansprüche, **dadurch gekennzeichnet, dass** R₂, R₄, R₅ und R₇ jeweils für Wasserstoff stehen und R₁, R₃, R₆, R₈ und R₉ unabhängig voneinander jeweils für C₁- bis C₁₂-Alkyl stehen.

4. Zusammensetzung gemäß einem der vorherigen Ansprüche, **dadurch gekennzeichnet, dass** Komponente B die Verbindung gemäß Formel (3a) ist

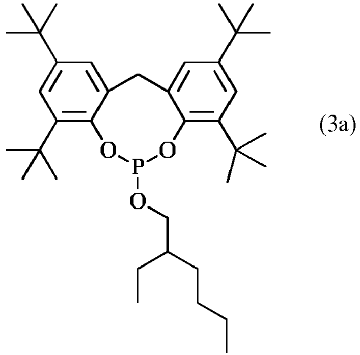

5. Zusammensetzung gemäß einem der vorhergehenden Ansprüche weiterhin enthaltend als Komponente C ein sterisch gehindertes Phenol.

6. Zusammensetzung gemäß Anspruch 5, wobei die Komponente C eine Verbindung der allgemeinen Struktur (4) ist 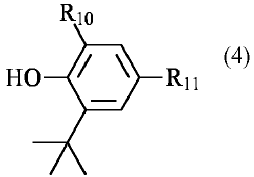 wobei R₁₀ für C₁- bis C₈-Alkyl und R₁₁ für einen organischen Rest mit C₄- bis C₆₀- steht.

7. Zusammensetzung gemäß einer der Ansprüche 5 oder 6, wobei die Komponente C ausgewählt ist aus der Gruppe bestehend aus Verbindungen gemäß den Strukturen (5), (6) und (7).

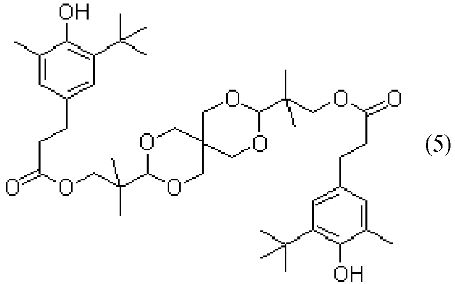

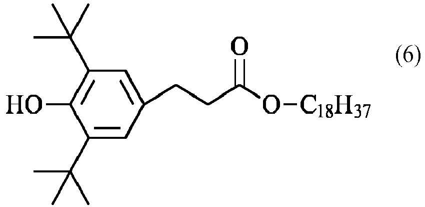

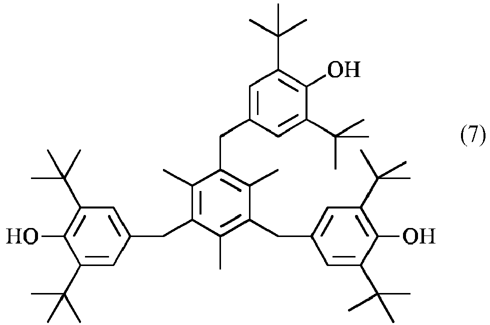

8. Zusammensetzung gemäß Anspruch 7, wobei als Komponente C die Verbindung gemäß Struktur (5) eingesetzt wird.

9. Zusammensetzung gemäß einem der vorherigen Ansprüche, **dadurch gekennzeichnet, dass** die Komponente B in einer Menge von 0,01 bis 0,5 Gew.-% eingesetzt wird.

10. Zusammensetzung gemäß einem der vorherigen Ansprüche, enthaltend
90 bis 99,4 Gew.-% der Komponente A,
0,01 bis 0,5 Gew.-% der Komponente B,
0 bis 0,5 Gew.-% der Komponente C und
0,1 bis 9 Gew.-% weitere polymere Bestandteile und/oder Polymeradditive verschieden von den Komponenten B und C als Komponente D.

11. Zusammensetzung gemäß einem der Ansprüche 5 bis 10, **dadurch gekennzeichnet, dass** die Komponenten B und C in einem Gewichtsverhältnis von 1:2 bis 6:1 eingesetzt werden.

12. Verfahren zur Herstellung von einer Formmasse, enthaltend die Schritte (i), (ii) und optional (iii), wobei in einem ersten Schritt (i)
Eine Zusammensetzung gemäß einem der Ansprüche 1 bis 11
durch Zuführung thermischer und/oder mechanischer Energie aufgeheizt, mindestens die Komponente A) dadurch aufgeschmolzen und alle eingesetzten Komponenten ineinander dispergiert und /oder gelöst werden,
und
in einem weiteren Schritt (ii)
die aus Verfahrensschritt (i) resultierende Schmelze (ii) durch Abkühlen wieder verfestigt und (iii) optional granuliert wird,
wobei die Verfahrensschritte (ii) und (iii) in beliebiger Reihenfolge zueinander durchgeführt werden können.

13. Formmasse, erhalten oder erhältlich nach einem Verfahren nach Anspruch 12.

14. Verwendung einer Zusammensetzung gemäß einem der Ansprüche 1 bis 11 oder einer Formmasse gemäß Anspruch 13 zur Herstellung von Formkörpern.

15. Formkörper enthaltend eine Zusammensetzungen gemäß einem der Ansprüche 1 bis 11 oder einer Formmasse gemäß Anspruch 13.
